# EUROPÄISCHE PATENTSCHRIFT

(11) **EP 1 490 216 B1**
(45) Veröffentlichungstag und Bekanntmachung des Hinweises auf die Patenterteilung: **02.04.2008**
(21) Anmeldenummer: 03720337.9
(22) Anmeldetag: 19.03.2003
(51) Int. Cl.: B32B 15/08, B32B 27/40, E04C 2/292, E04C 2/296, B29C 33/00

(54) **HERSTELLUNG VON VERBUNDELEMENTEN**
METHOD FOR PRODUCING COMPOSITE ELEMENTS
PROCEDE DE FABRICATION D'ELEMENTS COMPOSITES

(30) Priorität: 26.03.2002 DE 10213753
(43) Veröffentlichungstag der Anmeldung: 29.12.2004
(73) Patentinhaber: BASF SE, 67056 Ludwigshafen (DE)
(72) Erfinder: DRÖGE, Thomas, 67434 Neustadt (DE); MERTES, Jürgen, 67122 Altrip (DE); STADLER, Edmund, 96142 Hollfeld (DE); KNOBLAUCH, Georg, 81247 München (DE); LÜNNE, Stefanie, 32369 Rahden (DE); BOOS, Jürgen, 48531 Nordhorn (DE)
(86) Internationale Anmeldenummer: PCT/EP2003/002844
(87) Internationale Veröffentlichungsnummer: WO 2003/080330

(56) Entgegenhaltungen:
- EP-A- 0 421 222
- WO-A-90/05633
- WO-A-96/04132
- DE-A- 1 947 517
- DE-U- 7 727 940
- GB-A- 2 000 725
- GB-A- 2 066 156
- GB-A- 2 120 167
- US-A- 3 696 452
- US-A- 3 864 201
- US-A- 5 773 121
- US-A- 5 888 642

## Beschreibung

Die Erfindung betrifft Verfahren zur Herstellung von Verbundelementen, die folgende Schichtstruktur aufweisen:
(i) 2 mm bis 20 mm, bevorzugt 2 mm bis 10 mm, besonders bevorzugt 5 mm bis 10 mm Metall, Kunststoff oder Holz, bevorzugt Metall,
(ii) 10 mm bis 300 mm, bevorzugt 10 mm bis 100 mm Kunststoff, bevorzugt Polyisocyanat-Polyadditionsprodukte
(iii) 2 mm bis 20 mm, bevorzugt 2 mm bis 10 mm, besonders bevorzugt 5 mm bis 10 mm Metall, Kunststoff oder Holz, bevorzugt Metall,
wobei in der Schicht (ii) Hohlkörper mit einem äußeren Durchmesser kleiner 5 mm, bevorzugt kleiner 500 µm vorliegen.

Außerdem betrifft die Erfindung Schiffe oder Bauwerke enthaltend die nach dem erfindungsgemäßen Verfahren hergestellten Verbundelemente. Die zu den Schichten (i), (ii) und (iii) dargestellten Längenangaben beziehen sich auf die Dicken der jeweiligen Schichten.

Für die Konstruktion von Schiffen, beispielsweise Schiffsrümpfen und Laderaumabdeckungen, Brücken, Dächern oder Hochhäusern müssen Konstruktionsteile verwendet werden, die erheblichen Belastungen durch äußere Kräfte standhalten können. Derartige Konstruktionsteile bestehen aufgrund dieser Anforderungen üblicherweise aus Metallplatten oder Metallträgern, die durch eine entsprechende Geometrie oder geeignete Verstrebungen verstärkt sind. So bestehen Schiffsrümpfe von Tankschiffen aufgrund von erhöhten Sicherheitsnormen üblicherweise aus einem inneren und einem äußeren Rumpf, wobei jeder Rumpf aus 15 mm dicken Stahlplatten, die durch ca. 2 m lange Stahlverstrebungen miteinander verbunden sind, aufgebaut ist. Da diese Stahlplatten erheblichen Kräften ausgesetzt sind, werden sowohl die äußere, als auch die innere Stahlhülle durch aufgeschweißte Verstärkungselemente versteift. Nachteilig an diesen klassischen Konstruktionsteilen wirken sich sowohl die erheblichen Mengen an Stahl aus, die benötigt werden, als auch die zeit- und arbeitsintensive Herstellung. Zudem weisen derartige Konstruktionsteile ein erhebliches Gewicht auf, wodurch sich eine geringere Tonnage der Schiffe und ein erhöhter Treibstoffbedarf ergibt. Zusätzlich sind solche klassischen Konstruktionselemente auf der Basis von Stahl sehr pflegeintensiv, da sowohl die äußeren Oberfläche, als auch die Oberflächen der Stahlteile zwischen der äußeren und inneren Hülle regelmäßig gegen Korrosion geschützt werden müssen.

Als Ersatz für die Stahlkonstruktionen sind SPS-Elemente (Sandwich-Plate-System) bekannt, die einen Verbund aus Metall und Kunststoff beinhalten. Durch die Haftung des Kunststoffs an den zwei Metallschichten entstehen Verbundelemente mit außerordentlichen Vorteilen gegenüber bekannten Stahl Konstruktionen. Derartige SPS-Elemente sind bekannt aus den Schriften US 6 050 208, US 5 778 813, DE-A 198 25 083, DE-A 198 25 085, DE-A 198 25 084, DE-A 198 25 087 und DE-A 198 35 727.

Der vorliegenden Erfindung lag die Aufgabe zugrunde, entsprechende Verbundelemente mit einer verbesserten Temperaturstabilität bei niedrigen und/oder hohen Temperaturen zu entwickeln.

Diese Aufgabe wurde erfindungsgemäß durch die eingangs dargestellten Verbundelemente gelöst.

Die erfindungsgemäßen Verbundelemente zeichnen sich im Vergleich zu den bekannten Verbundelementen, bei deren Herstellung beispielsweise der Einsatz von kompakten Mikroglaskugeln bekannt war, durch die folgenden Vorteile aus:
- geringeres Gewicht,
- Einführung einer Schaumstruktur in die Schicht (ii), ohne dass eine Luftbeladung der Komponenten oder ein Treibmittelzusatz notwendig ist,
- überlegene mechanische Eigenschaften der Schicht (ii), z. B. kleinere Speichermodulwerte bei niedrigen Temperaturen und größere Speichermodulwerte bei hohen Temperaturen.

Die Hohlkörper weisen bevorzugt eine Dichte von kleiner 1 g/cm³, besonders bevorzugt 0,1 bis 0,6 g/cm³ auf. Als Dichte gilt hierbei die "True-Particle-Density", d.h. der Quotient aus dem Gewicht der Hohlkörper und dem Volumen der Hohlkörper, wenn die Hohlkörper vollständig mit Gas umgeben sind. Die Hohlkörper, bevorzugt Hohlkugeln, besitzen bevorzugt eine durchschnittliche Wandstärke von 5 bis 20 % des Hohlkörperdurchmessers. Die Hohlkörper können auf allgemein bekannten Materialien, beispielsweise Kunststoffen, z.B. Polyethylen, Polypropylen, Polyurethan, Polystyrol oder einen Gemisch daraus, oder mineralischen Materialien, z.B. Ton, Aluminiumsilikat, Glas basieren, bevorzugt jedoch auf Glas, Aluminiumsilikat oder Keramik, besonders bevorzugt Glas. Derartige Hohlkörper sind allgemein bekannt und kommerziell erhältlich. Bevorzugt nehmen die Hohlkörper 1 bis 60 %, besonders bevorzugt 10 bis 40 % des Gesamtvolumens, d.h. inklusive der Hohlkörper, der Schicht (ii) ein. Die Hohlkörper können in ihrem Hohlraum Wände oder andere konstruktive Elemente aufweisen. Der Hohlraum der Hohlkörper kann beispielsweise mit Luft, Inertgasen, beispielsweise Stickstoff, Helium oder Argon, oder Reaktivgasen, beispielsweise Sauerstoff oder sonstigen bekannten Gasen gefüllt sein, bevorzugt mit Luft, und vollständig oder überwiegend, bevorzugt vollständig von dem eingangs dargestellten Material der Hohlkörper umschlossen sein. Die Form der Hohlkörper kann kugelförmig oder irregulär sein. Die Hohlkörper können im Hohlraum ein Vakuum oder Teilvakuum aufweisen. Bevorzugt werden als Hohlkörper Mikroglashohlkugeln verwendet. In einer besonders bevorzugten Ausführungsform weisen die Mikroglashohlkugeln eine Druckfestigkeit von mindestens 15 bar auf. Beispielsweise können als Mikrohohlglaskugeln 3M - Scotchlite^{®} Glass Bubbles oder Q-Cel^{®} der Firma Osthoff-Petrasch oder Fillite der Firma Trelleborg Fillite verwendet werden.

Bei der Schicht (ii) handelt es sich bevorzugt um Polyisocyanat-Polyadditionsprodukte erhältlich durch Umsetzung der Ausgangsstoffe (a) Isocyanat und (b) gegenüber Isocyanaten reaktive Verbindungen. Die Herstellung der erfindungsgemäßen Verbundelemente kann somit bevorzugt derart erfolgen, dass man zur Herstellung von (ii) (a) Isocyanate und (b) gegenüber Isocyanaten reaktive Verbindungen in Gegenart von Hohlkörpern mit einem äußeren Durchmesser kleiner 500 µm umsetzt. Die Hohlkörper können der Komponente (b) und/oder der Komponente (a) und/oder flüssigen Umsetzungsprodukten von (a) und (b) zugegebene werden. Die Zugabe kann direkt im Mischkopf, beispielsweise der Pumpe, oder auch bereits in den Vorratsbehälter der Ausgangskomponenten (a) und/oder (b) erfolgen. Das Vermischen der Hohlkörper kann sowohl von Hand, beispielsweise mittels eines Handrührers, oder auch mittels bekannter Rührer erfolgen. Es können Hoch- und Niederdruckmaschinen eingesetzt werden, wobei der Mischkopf bevorzugt so zu modifizieren ist, dass bei den auftretenden Scherkräften die Hohlkörper bei der Verarbeitung nicht zerbrechen. Bei sehr hohen Gehalten an Hohlkörpern und/oder großen Verbundelementen kann ein Bauteil gleichzeitig über 2 oder mehr Mischköpfe bzw. Maschinen befüllt werden.

Als Mischvorrichtung zur Mischung der erfindungsgemäßen Hohlkörper mit (a) und/oder (b) und/oder Umsetzungsprodukten von (a) und (b) ist beispielsweise eine bevorzugt kontinuierlich arbeitenden Vorrichtung, aufgebaut aus
einem Mischtopf,
einer Zulaufleitung für (a), (b) und/oder einem flüssigen Umsetzungsprodukt von (a) mit (b),
einer Zulaufleitung für Mikrohohlkugeln,
einem Rührorgan und
einer regelbaren Austrittsöffnung geeignet. Diese bevorzugte Mischvorrichtung kann der Hoch- und/oder Niederdruckmaschine mit dem oder den Mischköpfen vor- oder nachgeschaltet, bevorzugt vorgeschaltet oder auch Teil dieser Maschinen sein.

Als Mischtopf können übliche Reaktionsgefäße, beispielsweise aus Stahl, Glas oder Kunststoff, wie z.B. Epoxyharz, dienen. Bevorzugt ist der Mischtopf trichterförmig aufgebaut, wobei die Austrittsöffnung sich am Trichterhals befindet. Bevorzugt wird dieser Trichter vertikal angeordnet. Die Größe des Mischtopfes hängt von dem Maßstab ab, in dem das erfindungsgemäße Verfahren durchgeführt werden soll, im allgemeinen kann der Mischtopf vom Mikromaßstab, d.h. beispielsweise umfassend ein Volumen von einigen cm³, bis zum Makromaßstab, d.h. umfassend ein Volumen bis zu einigen m³, betrieben werden. An den Mischtopf führen die Zuläufe. In einer bevorzugten Ausführungsform sind die Mengen an Zulauf getrennt voneinander regelbar. Die Dosierung des Zulaufs an reaktiven Rohstoffen zur Herstellung von (ii) kann beispielsweise durch eine bekannte PUR-Dosiermaschine erfolgen, die Dosierung des Zulaufs an Mikrohohlkugeln kann beispielsweise durch ein Schneckendosiergerät erfolgen.

Die Mischvorrichtung ist bevorzugt mit einem Rührorgan ausgestattet. Dieses Rührorgan sorgt einerseits für die Vermischung, andererseits für einen konstanten Transport des Gemisches innerhalb des Mischtopfes von den Zuläufen zu der Austrittsöffnung. Hierfür sind im allgemeinen übliche Rührer, wie beispielsweise Scheibenrüher oder Flügelrührer geeignet. Bevorzugt ist, dass das Rührorgan so justiert wird, dass das Rühren totraumfrei erfolgt. Unterschiedliche Rührergrößen und -geometrien ermöglichen eine optimale Anpassung an die für unterschiedliche Viskositäten und Durchsätze erforderlichen Mischanforderungen. Weiterhin ist es bevorzugt, dass das Rührorgan so justiert und mit einer Geschwindigkeit betrieben wird, so dass möglichst keine Beschädigung der Mikrohohlkugeln auftritt. Üblicherweise wird mit einer Rührgeschwindigkeit von 100 bis 5000 Upm, bevorzugt von 500 bis 1500 Upm, besonders bevorzugt von 700 bis 1000 Upm gearbeitet. Werden beispielsweise Mikrohohlglaskugeln verwendet, so liegt im allgemeinen der Anteil an beschädigten Mikrohohlglaskugeln nach der Einarbeitung unter 40 Gew.%, bevorzugt unter 10 Gew.%, mehr bevorzugt unter 5 Gew.%, besonders bevorzugt unter 2 Gew.% und insbesondere unter 1 Gew.%, bezogen auf das Gesamtgewicht der verwendeten Mikrohohlglaskugeln. Der Anteil kann gegebenenfalls je nach Dichte der eingesetzten Hohlkugeln variieren. Der Austritt des Ausgangsmaterials enthaltend die erfindungsgemäßen Hohlkörper zur Herstellung von (ii) erfolgt an der Austrittsöffnung. Die Austrittsöffnung ist bevorzugt regelbar. In einer besonders bevorzugten Ausführungsform erfolgt die Regelung durch einen kegelförmigen Verschluss, der in vertikaler Richtung zur Austrittsöffnung bewegt werden kann. Durch komplettes Absenken des Kegels kann die Austrittöffnung ganz verschlossen werden, durch weites Anheben kann sie ganz geöffnet werden. Auf diesem Weg ist eine Dosierung des austretenden Produkts möglich. In einer bevorzugten Ausführungsform ist dieser kegelförmige Verschluss am Rührorgan integriert. Andere Regelvorrichtungen, die den gewünschten Steuerungseffekt bewirken, sind jedoch auch möglich. Durch entsprechende Dosierung der Zuläufe und des Ablaufs an Produkt kann die durchschnittliche Verweildauer in der Mischvorrichtung geregelt werden. im aiigemeinen beträgt diese zwischen 0,1 und 10 Minuten, bevorzugt zwischen 0,1 und 1 Minuten. Es ist ferner vorteilhaft, die Umsetzung und die Vermischung so zu steuern, dass das unmittelbar an der Austrittsöffnung austretende Gemisch eine Viskosität von 1000 bis 30.000 mPas aufweist, wobei die Viskosität bei Raumtemperatur (25°C) mit einem Rotationsviskosimeter mit Kegel-Platte Geometrie bestimmt wird. Als Parameter für eine optimale Verweilzeit im Mischtopf kann auch die permanente Erfassung der Auslauftemperatur dienen. Eine Auslauftemperatur von 20 °C bis 100 °C, bevorzugt 20 °C bis 80 °C, besonders bevorzugt 20 °C bis 50 °C, sichert eine ausreichende "offene Zeit" (bis das Material fest ist) und verhindert eine zu starke exotherme Reaktion, was ein "Festwerden" des Polyurethans bereits im Mischtopf zur Folge haben und damit den Abbruch des Herstellungsprozesses nach sich ziehen würde. Die Steuerung des Prozesses ist auf diese Weise ohne erheblichen technischen Aufwand für den Fachmann durchführbar.

Ansonsten ist zur Herstellung der Verbundelemente unabhängig von den Hohlkörpern beispielhaft folgendes auszuführen:

Die Ausgangsstoffe zur Herstellung von (ii) werden bevorzugt in flüssigem Zustand in den Raum zwischen (i) und (iii) gefüllt, wobei bevorzugt während dieses Füllvorgangs ein Unterdruck in dem zu füllenden Raum zwischen (i) und (iii) erzeugt wird. Dies bietet den Vorteil, dass die Flüssigkeit in den Raum "gesaugt" und auch kleine Hohlräume mit der Flüssigkeit ausgefüllt werden. Bevorzugt beträgt der Unterdruck in dem zu befüllenden Raum 0,2 bar bis 0,8 bar, d.h. der Druck in der zu befüllenden Form ist 0,8 bis 0,2 bar niedriger als der Umgebungsluftdruck. Der Unterdruck, der beispielsweise durch allgemein bekannte Vakuumpumpen erzeugt werden kann, wird bevorzugt dadurch erreicht, daß (i) und/oder (iii) zusätzlich zu der oder den Öffnungen (iv) in (i) und/oder (iii), über die die Ausgangsstoffe zur Herstellung von (ii) eingetragen werden, über mindestens eine weitere Öffnung (v) verfügen, über die der Unterdruck angelegt wird. Bevorzugt wird zwischen einer Vakuumpumpe, die den Unterdruck erzeugt, und der Öffnung (v) in (i) ein Schlauch zwischengeschaltet. Dieser Schlauch kann beispielsweise an (i) gepresst oder verklebt werden. Die Mengen an Ausgangsstoffen zur Herstellung von (ii) sind nur schwierig so zu bemessen, dass gerade der zu befüllende Raum (R) gefüllt wird, aber ein Überlaufen verhindert wird. Deshalb wird bevorzugt eine größere Menge an Ausgangskomponenten zur Herstellung von (ii) in den Raum zwischen (i) und (iii) gegeben, als dieser aufnehmen kann. Der resultierende Überlauf wird bevorzugt über Öffnungen (v) abgeführt. Sobald der Raum zwischen (i) und (iii) mit den Ausgangskomponenten zur Herstellung von (ii) vollständig gefüllt ist, kann anhand eines Anstiegs der Flüssigkeit im Schlauch, der bevorzugt transparent ist, die Befüllung beendet und die Öffnungen (iv) und (v) verschlossen werden. Das Verschlie-ßen der Öffnungen kann beispielsweise mit einem Kunststoff - oder Metallpfropfen bevorzugt mit einem Schraubverschluss, der sich entweder im Überlaufgefäß oder bevorzugt zwischen Überlaufgefäß und (i) und/oder (iii) befindet, erfolgen. Die Öffnungen (iv) bleiben bevorzugt bis zum Ende des Aushärtevorgangs der Mischung (a) und (b) durch den fixierten Mischkopf verschlossen. Bevorzugt weist der zu befüllende Raum zwischen (i) und (iii) lediglich die Öffnungen (iv) und (v) auf, wobei sich an (iv) das Ausflussende, bevorzugt Mischkopf befindet und an (v) der Unterdruck angelegt wird. Da nach dieser bevorzugten Ausführungsform keine Luft in den zu befüllenden Raum gelangen kann, ist es möglich, einen Unterdruck zu erzeugen.

Üblicherweise weisen die Schichten (i) und (iii) keine Merkmale auf, die zu einer Befestigung eines Ausflussendes zur Befüllung des Raumes zwischen (i) und (iii) mit Flüssigkeiten dienen können. Bei dem Ausdruck "Ausflussende" kann es sich um übliche Einrichtungen handeln, mit Hilfe derer Flüssigkeiten abgefüllt werden, beispielsweise Tankstutzen, Schlauchenden, Mischköpfe, Statikmischer oder ähnliches. Bevorzugt handelt es sich bei dem Ausflussende um einen Mischkopf. Derartige Mischköpfe sind allgemein bekannt und beispielsweise in Zusammenhang mit üblichen Dosiereinrichtungen für Polyurethansysteme kommerziell erhältlich. Die Befestigung des Ausflußendes, bevorzugt des Mischkopfes kann bevorzugt derart erfolgen, dass das Ausflußende der Fördereinrichtung oder eine Halterung für das Ausflussende der Fördereinrichtung an mindestens drei Stellen, bevorzugt drei bis sechs Stellen, besonders bevorzugt vier oder fünf Stellen mit der Schicht (i) verschraubt wird. Bevorzugt wird die Flüssigkeit durch mindestens eine Öffnung (iv) in (i) und/oder (iii) in den Raum zwischen (i) und (iii) gefüllt. Bevorzugt kann man zur Befestigung beispielsweise eines Mischkopfes Bolzen mit einem Gewinde, die zur Befestigung des Mischkopfes oder einer Halterung für den Mischkopf dienen, in die Schicht (i) schießen. Diese Bolzen können bevorzugt an der vom Gewinde abgewandten Seite spitz zulaufen, um sie einfacher in die Schicht (i) einbringen zu können. Die Bolzen weisen bevorzugt einen Durchmesser von 6 mm bis 20 mm und eine Länge von 8 mm bis 42 mm auf. Das Gewinde, das nach der Fixierung der Bolzen nach außen gerichtet ist, d.h. auf der Seite von (i), die von (iii) abgewandt ist, hat bevorzugt eine Länge von 4 mm bis 30 mm. Das Einbringen der Bolzen erfolgt beispielsweise durch Schiessen mit einem Bolzenschubwerkzeug, das kommerziell z.B. bei der Firma Hilti erhältlich ist. Bevorzugt weist (i) somit Gewinde auf, mit Hilfe derer das Ausflussende an der Öffnung (iv), durch die die Flüssigkeit eingefüllt wird, mit (i) verschraubt wird. Bevorzugt kann man zur Verbesserung der Dichtung zwischen dem Ausflußende und der Schicht (i) zwischen der Schicht (i) und dem Mischkopf einen O-Ring aus einem elastischen Material fixieren. Derartige O-Ringe sind allgemein bekannt und können in ihren Abmessungen auf den Durchmesser der Öffnung (iv) und den Mischkopf abgestimmt werden. Bevorzugt fixiert man den Mischkopf somit dicht an der Öffnung (iv) in (i) oder (iii), durch die die Eintragung der Ausgangsstoffe erfolgt.

Besonders bevorzugt befestigt man nicht direkt das Ausflußende mit der Schicht (i), sondern fixiert das Ausflußende an einer Halterung, die mit (i) verschraubt wird. Bei dieser Halterung, die aus üblichen Materialien, beispielsweise Kunststoffen. Holz oder bevorzugt üblichen Metallen bestehen kann, handelt es sich bevorzugt um eine Konstruktion, die über Bohrungen verfügt, durch die die auf (i) fixierten Gewinde geführt und beispielsweise mittels entsprechender Muttern befestigt werden. Außerdem weist die Halterung Befestigungselemente für das Ausflussende auf, beispielsweise Steckverbindungen, Schraubverbindungen oder Kanten, mit denen das Ausflussende durch elastische Bänder mit der Halterung verspannt werden kann. Besonders bevorzugt wird das Ausflussende an mindestens drei Punkten mit der Halterung befestigt, um ein Verkanten zu vermeiden. Bevorzugt wird man somit eine Halterung an mindestens drei Gewinden, die an (i) befestigt sind, verschrauben und an dieser Halterung den Mischkopf fixieren. Die Bolzen können nach Fertigstellung der Verbundelemente beispielsweise an der Oberfläche von (i) abgesägt werden.

Das Befüllen des Raumes zwischen (i) und (iii) kann mit üblichen Fördereinrichtungen, bevorzugt kontinuierlich, durchgeführt werden, beispielsweise mit Hoch- und Niederdruckmaschinen, vorzugsweise Niederdruckmaschinen. Bevorzugt erfolgt das Befüllen mit einer Niederdruckmaschine (z.B. der Firma Cannon) über einen oder mehrere, bevorzugt einen Mischkopf, in dem die Ausgangskomponenten vermischt werden, in einem einzigen Arbeitsschritt, bevorzugt Injektionsvorgang. In einem einzigen Injektionsvorgang bedeutet, dass die Befüllung des Raumes zwischen (i) und (iii) beispielsweise mit den Ausgangsstoffen zur Herstellung von (ii) vor der vollständigen Befüllung nicht unterbrochen wird. Die Ausgangsstoffe werden somit bevorzugt in einem einzigen Schuss unter Druck in den Raum zwischen (i) und (iii) gegeben. Dies gilt insbesondere dann, wenn es sich bei der Flüssigkeit um eine reaktive Mischung handelt, die mit der Reaktion aushärtet. Bevorzugt trägt man somit die Ausgangsstoffe mittels einer Hochdruckapparatur über einen oder mehrere, bevorzugt einen Mischkopf ein. Die Befüllung des Raumes zwischen (i) und (iii) kann sowohl in vertikaler Ausrichtung von (i) und (iii), als auch in horizontaler Ausrichtung von (i) und (iii) erfolgen.

Die Schichten (i) und (iii) können bevorzugt als übliche Kunststoff-, Holz- oder bevorzugt Metallplatten, beispielsweise Eisen-, Stahl-, Kupfer- und/oder Aluminium-platten, mit den erfindungsgemäßen Dicken eingesetzt werden.

Sowohl (i) als auch (ii) können beschichtet, beispielsweise grundiert, geprimert, lackiert und/oder mit üblichen Kunststoffen beschichtet bei der Herstellung der erfindungsgemäßen Verbundelemente eingesetzt werden. Bevorzugt werden (i) und (iii) unbeschichtet und besonders bevorzugt beispielsweise durch übliches Sandstrahlen gereinigt eingesetzt.

Bevorzugt kann man den zu befüllenden Raum trocknen. Dies bietet den Vorteil, dass insbesondere zu befüllende flüssige Komponenten, die gegenüber Wasser reaktiv sind, beispielsweise Isocyanate, nicht in unerwünschten Nebenreaktion abreagieren. Das Trocknen, das bevorzugt direkt vor dem Befüllen stattfindet, kann beispielsweise mittels heißer Luft oder mittels Pressluft erfolgen. Des weiteren kann man den zu befüllenden Raum zwischen (i) und (iii) durch eine Erwärmung von (i) und/oder (iii) auf eine Temperatur von 20 bis 150 °C für eine Dauer von 10 min bis 180 min trocknen. Bevorzugt kann man den zu befüllenden Raum zwischen (i) und (iii) durch ein Gebläse trocknen, das Luft durch Öffnungen (iv) und (v) in (i) und/oder (iii) durch den zu befüllenden Raum zwischen (i) und (iii) leitet.

Bevorzugt handelt es sich bei den Öffnungen (iv) und (v) um Bohrungen in (i) und/oder (iii) mit einem Durchmesser von 0,5 bis 5,0 cm in (i) und/oder (iii).

Der Raum, der zwischen (i) und (iii) mit den Ausgangsstoffen zur Herstellung von (ii) gefüllt wird, muss nicht den ganzen Raum zwischen (i) und (iii) darstellen. Sowohl (i) als auch (iii) können an den Rändern über (ii) überstehen, d.h. nur in einem Teilbereich von (i) und (iii) erfolgt eine Bindung von (i) über (ii) an (iii). Beispielsweise kann der Raum zwischen (i) und (iii) vor der Befüllung mit den Ausgangsstoffen derart abgedichtet werden, dass sich die Dichtung innerhalb des von (i) und (iii) umschlossenen Raumes befindet und Ränder von (i) und/oder (iii) überstehen.

Die Förderleistung kann in Abhängigkeit des zu befüllenden Volumens variiert werden. Um eine homogene Durchhärtung von (ii) zu gewährleisten, wird die Förderleistung und Fördereinrichtung bevorzugt derart gewählt, dass der zu befüllende Raum innerhalb von 0,5 bis 20 min mit den Komponenten zur Herstellung von (ii) gefüllt werden kann. Bevorzugt handelt es sich um Hochdruck- oder besonders bevorzugt Niederdruckmaschinen, bevorzugt mit exzentrischen Schneckenpumpen, wobei bevorzugt der Vorratsbehälter mit Rührwerk und bevorzugt temperierbar ausgestaltet ist und bevorzugt ein Kreislauf Vorratsbehälter-Mischkopf-Vorratsbehälter vorliegt, wobei bevorzugt die Austragsleistung 0,1 bis 3,0 kg/sec beträgt.

Bei der Entwicklung geeigneter Herstellungsverfahren wurde festgestellt, dass ein unkontrolliertes Herauslaufen von flüssigen Ausgangskomponenten zur Herstellung von (ii) kaum als Fehler zu beheben ist. Aufgrund der limitierten Menge pro Schuss führt ein unkontrollierter Verlust an Ausgangsmaterial zur Herstellung von (ii) zu einer unvollständigen Befüllung des Raumes zwischen (i) und (iii). Aufgrund der schnellen Reaktion und der sehr guten Haftung von (ii) an (i) und (iii) entstehen durch eine unvollständige Befüllung weite Bereiche im Verbundelement, die kein (ii) enthalten und auch nicht mehr mit Ausgangskomponenten aufgefüllt werden können. Derartige Verbundelemente müssen leider verworfen werden.

Um ein Verlust an Ausgangskomponenten zu verhindern, hat es sich daher als vorteilhaft erwiesen, die zu befüllende Form sehr genau auf ihre Dichtigkeit zu überprüfen. Üblicherweise werden die Schichten (i) und (iii) in geeigneter Anordnung, beispielsweise parallel zueinander, fixiert. Der Abstand wird üblicherweise so gewählt, daß der Raum (R) zwischen (i) und (iii) eine Dicke von 10 bis 300 mm aufweist. Die Fixierung von (i) und (iii) kann beispielsweise durch Abstandshalter z.B. in einer Form oder geeigneten Halterung erfolgen. Die Ränder des Zwischenraumes werden üblicherweise derart abgedichtet, dass der Raum zwischen (i) und (iii) zwar mit der Flüssigkeit bzw. den Ausgangskomponenten zur Herstellung von (ii) vollständig gefüllt werden kann, ein Herausfließen dieser Ausgangskomponenten vor der vollständigen Befüllung aber verhindert wird. Das Abdichten kann mit üblichen Kunststoff-, Papier- oder Metallfolien und/oder -platten, die beispielsweise verklebt, verschweißt oder angepresst werden und die gegebenenfalls auch als Abstandshalter dienen können, erfolgen. Dieses bevorzugte Abdichten bezieht sich nicht auf die bevorzugten Öffnungen (iv) und (v), die eingangs dargestellt wurden.

Die Überprüfung der Dichtigkeit von (R) vor der Befüllung mit den Ausgangskomponenten erfolgt bevorzugt durch Druckdifferenzmessung. Unter dem Ausdruck Druckdifferenzmessung ist zu verstehen, dass man versucht, eine Druckdifferenz zwischen dem Raum (R) und der äußeren Umgebung über einen bestimmten Zeitraum aufzubauen, beispielsweise indem man versucht, in (R) einen Unter- oder Überdruck im Verhältnis zur äußeren Umgebung zu erreichen. Dies kann durch übliche Vakuumpumpen oder allgemein bekannte Kompressoren, die Luft oder Gas in den Raum (R) pumpen, erreicht werden. Kann ein stabiler Über- oder Unterdruck in (R) erzeugt werden, so deutet dies auf eine ausreichend dichte Kavität hin, die mit den Ausgangskomponenten zur Herstellung von (ii) gefüllt werden kann. Dabei ist bevorzugt zu beachten, dass man die Öffnungen (iv) bzw. (v), die man zum Befüllen von (R) mit den Ausgangskomponenten bzw. als Entlüftungsöffnungen bzw. als Überlauföffnungen zum Austritt von überschüssigen Ausgangskomponenten vorsieht, ebenfalls vorübergehend abdichtet. Dabei kann gegebenenfalls mindestens eine dieser Öffnungen dazu dienen, Vakuumpumpe oder Kompressor an (R) anzuschließen.

Die zu befüllende Form besteht bevorzugt aus den angegebenen Schichten (i) und (iii) sowie (vi), die bevorzugt parallel angeordnet sind, sowie bevorzugt aus Abdichtungen zwischen den Schichten (i) und (iii), die ein Herauslaufen der Flüssigkeit beim Einfüllen verhindern. Die Schicht (ii) ist somit bevorzugt haftend zwischen den Schichten (i) und (iii) angeordnet.

Die erfindungsgemäßen Verbundelemente können bevorzugt derart hergestellt werden, dass man ein flächige Gebilde (vi) im wesentlichen parallel, bevorzugt parallel, in einem Abstand von 5 mm bis 150 mm, bevorzugt 15 mm bis 50 mm, besonders bevorzugt 15 mm bis 30 mm, zu der Schicht (i) fixiert, die Schicht (iii) im wesentlichen parallel zu (i) und (vi) fixiert, den mit (ii) auszufüllenden Raum mit Ausnahme von Öffnungen, beispielsweise den in dieser Schrift beschriebenen Öffnungen (iv) und (v), die zum Befüllen benötigt werden, abdichtet und anschließend den auszufüllenden Raum mit den Ausgangsstoffen zur Herstellung von (ii) füllt. Die Fixierung von (vi) mit (i) kann bei horizontaler Ausrichtung von (i) beispielsweise derart erfolgen, dass man Spacer, beispielsweise Holz-, Kunststoff oder Metallblöcke mit geeigneter Höhe auf die Schicht (i) bringt und auf diese Spacer das Gebilde (vi) legt. Anschließend kann die Schicht (iii) in geeigneter Entfernung, d.h. bei geeigneter Schichtdicke von (ii), bevorzugt parallel zu (i) und (vi) fixiert werden, beispielsweise indem man an den Rändern des Raumes, den (ii) einnehmen soll, Metallplatten an (i) fixiert, beispielsweise schweißt, bevorzugt senkrecht zu (i), und auf diese Metallplatten, die den seitlichen Rand von (ii) begrenzen und abschließen, die Schicht (iii) fixiert, beispielsweise verschweißt. Die Ausgangsstoffe werden bevorzugt kontinuierlich ohne Unterbrechung in einem einzigen Arbeitsschritt in den zu befüllenden Raum zwischen (i) und (iii) eingetragen, besonders bevorzugt wird man die Ausgangsstoffe mittels einer Hochdruckapparatur über einen oder mehrere Mischköpfe eintragen, beispielsweise einfüllen.

Bevorzugt enthält die Flüssigkeit zur Herstellung von (ii) (a) Isocyanate und (b) gegenüber Isocyanaten reaktive Verbindungen. Die Schicht (ii) stellt somit bevorzugt Polyisocyanat-Polyadditionsprodukte dar. In dieser Schrift sind unter den Ausdrücken "Ausgangsstoffe" oder "Ausgangskomponenten" insbesondere (a) Isocyanate und (b) gegenüber Isocyanaten reaktive Verbindungen zu verstehen, aber gegebenenfalls, soweit sie zum Einsatz kommen, auch (c) Gase, (d) Katalysatoren, (e) Hilfsmittel und/oder (f) Treibmittel.

Die Ausgangskomponenten zur Herstellung der Polyisocyanat-Polyadditionsprodukte werden üblicherweise bei einer Temperatur von 0 bis 100°C, vorzugsweise von 20 bis 60°C, gemischt und wie bereits beschrieben in den Raum zwischen (i) und (iii) eingebracht. Die Vermischung kann mechanisch mittels eines Rührers oder einer Rührschnecke erfolgen. Die Reaktionstemperatur, d.h. die Temperatur, bei die Umsetzung erfolgt, beträgt in Abhängigkeit von der Materialdicke üblicherweise > 20 °C, bevorzugt 50 bis 150 °C.

Die Schicht (ii) der erfindungsgemäß hergestellten Verbundelemente weist bevorzugt ein Elastizitätsmodul von >275 MPa im Temperaturbereich von -45 bis +50 °C (nach DIN 53457), eine Adhäsion zu (i) und (iii) von >4 MPa (nach DIN 53530), eine Dehnung von >30% im Temperaturbereich von -45 bis +50 °C (nach DIN 53504), eine Zugfestigkeit von >20 MPa (nach DIN 53504) und eine Druckfestigkeit von > 20 MPa (nach DIN 53421) auf. Die Dichte der Schicht (ii), d.h. inklusive der erfindungsgemäßen Hohlkörper, beträgt bevorzugt 350 kg/m³ bis 1200 kg/m³, besonders bevorzugt 650 kg/m³ bis 1000 kg/m³.

Die Herstellung der erfindungsgemäßen Verbundelemente kann man derart durchführen, dass man zwischen (i) und (iii) Polyisocyanat-Polyadditionsprodukte (ii), üblicherweise Polyurethane, die gegebenenfalls Harnstoff- und/oder Isocyanuratstrukturen aufweisen können, durch Umsetzung von (a) isocyanaten mit (b) gegenüber isocyanaten reaktiven Verbindungen gegebenenfalls in Gegenwart von Treibmitteln (f), 1 bis 50 Volumen-%, bezogen auf das Volumen der Polyisocyanat-Polyadditionsprodukte, mindestens eines Gases (c), (d) Katalysatoren und/oder (e) Hilfsmittel herstellt, wobei bevorzugt (ii) an (i) und (iii) haftet. Die Herstellung derartiger Polyisocyanat-Polyadditionsprodukte (ii) ist vielfach beschrieben worden.

Die Oberflächen von (i) und (iii) können vor der Herstellung der Verbundelemente zur Reinigung und Erhöhung der Oberflächenrauhigkeit mit Sand oder Stahlkugeln bevorzugt mit Korund oder Eisenkies gestrahlt werden. Dieses Strahlen kann nach den üblichen Verfahren erfolgen, bei denen das Strahlgut beispielsweise unter hohem Druck auf die Oberflächen auftrifft. Geeignete Apparaturen für eine solche Behandlung sind kommerziell erhältlich.

Diese Behandlung der Oberflächen von (i) und (iii), die nach der Umsetzung von (a) mit (b) in Kontakt mit (ii) stehen, führt zu einer deutlich verbesserten Haftung von (ii) an (i) und (iii). Das Strahlen wird bevorzugt direkt vor der Einbringung der Komponenten zur Herstellung von (ii) in den Raum zwischen (i) und (iii) durchgeführt. Die Oberflächen von (i) und (iii), an die (ii) haften soll, sind bevorzugt frei von anorganischen und/oder organischen Stoffen, die eine Haftung vermindern, beispielsweise Staub, Schmutz, Ölen und Fetten oder allgemein als Formtrennmitteln bekannten Stoffen.

Die Ausgangsstoffe (a), (b), (c), (d), (e) und (f) in dem erfindungsgemäßen Verfahren werden im Folgenden beispielhaft beschrieben:

Als Isocyanate (a) kommen die an sich bekannten aliphatischen, cycloaliphatischen, araliphatischen und/oder aromatischen Isocyanate, bevorzugt Diisocyanate in Frage, die gegebenenfalls nach allgemein bekannten Verfahren biuretisiert und/oder isocyanuratisiert worden sein können. Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylendiisocyanat-1,4, Lysinesterdiisocyanate (LDI), Hexamethylendiisocyanat-1,6 (HDI), Cyclohexan-1,3- und/oder 1,4-diisocyanat, 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, 1-Isocyanato-3,3,5-trimethyl-5-isocyanatomethylcyclohexan (IPDI), 2,4-und/oder 2,6-Toluylendüsocyanat (TDI), 4,4'-, 2,4'- und/oder 2,2'-Diphenylmethandiisocyanat (MDI), Polyphenylpolymethylen-polyisocyanate und/oder Mischungen enthaltend mindestens zwei der genannten Isocyanate. Außerdem können Ester-, Harnstoff-, Allophanat-, Carbodiimid-, Uretdion- und/oder Urethangruppen enthaltende Di- und/oder Polyisocyanate in dem erfindungsgemäßen Verfahren eingesetzt werden. Bevorzugt werden 2,4'-, 2,2'- und/oder 4,4'-MDI und/oder Polyphenylpolymethylen-polyisocyanate eingesetzt, besonders bevorzugt Mischungen enthaltend Polyphenylpolymethylen-polyisocyanate und mindestens eines der MDI-Isomere.

Als (b) gegenüber Isocyanaten reaktive Verbindungen können beispielsweise Verbindungen eingesetzt werden, die als gegenüber Isocyanaten reaktive Gruppen Hydroxyl-, Thiol- und/oder primäre und/oder sekundäre Aminogruppen aufweisen und üblicherweise ein Moleukargewicht von 60 bis 10000 g/mol aufweisen, z.B. Polyole ausgewählt aus der Gruppe der Polymerpolyole, Polyetherpolyalkohole, Polyesterpolyalkohole, Polythioether-polyole, hydroxylgruppenhaltigen Polyacetale und hydroxylgruppenhaltigen aliphatischen Polycarbonate oder Mischungen aus mindestens zwei der genannten Polyole. Diese Verbindungen weisen üblicherweise eine Funktionalität gegenüber Isocyanaten von 2 bis 6 und ein Molekulargewicht von 400 bis 8000 auf und sind dem Fachmann allgemein bekannt.

Beispielsweise kommen Polyetherpolyalkohole in Frage, die nach bekannter Technologie durch Anlagerung von Alkylenoxiden, beispielsweise Tetrahydrofuran, 1,3-Propylenoxid, 1,2- bzw. 2,3-Butylenoxid, Styroloxid und vorzugsweise Ethylenoxid und/oder 1,2-Propylenoxid an übliche Startersubstanzen erhältlich sind. Als Startersubstanzen können beispielsweise bekannte aliphatische, araliphatische, cycloaliphatische und/oder aromatische Verbindungen eingesetzt werden, die mindestens eine, bevorzugt 2 bis 4 Hydroxylgruppen und/oder mindestens eine, bevorzugt 2 bis 4 Aminogruppen enthalten. Beispielsweise können als Startersubstanzen Ethandiol, Diethylenglykol, 1,2- bzw. 1,3-Propandiol, 1,4-Butandiol, 1,5-Pentandiol, 1,6-Hexandiol, 1,7-Heptandiol, Glycerin, Trimethylolpropan, Neopentylglykol, Zucker, beispielswesie Saccharose, Pentaerythrit, Sorbitol, Ethylendiamin, Propandiamin, Neopentandiamin, Hexamethylendiamin, Isophorondiamin, 4,4'-Diaminodicyclohexylmethan, 2-(Ethylamino)ethylamin, 3-(Methylamino)propylamin, Diethylentriamin, Dipropylentriamin und/oder N,N'-Bis(3-aminopropyl)-ethylendiamin eingesetzt werden.

Die Alkylenoxide können einzeln, alternierend nacheinander oder als Mischungen verwendet werden. Bevorzugt werden Alkylenoxide verwendet, die zu primären Hydroxylgruppen in dem Polyol führen. Besonders bevorzugt werden als Polyole solche eingesetzt, die zum Abschluss der Alkoxylierung mit Ethylenoxid alkoxyliert wurden und damit primäre Hydroxylgruppen aufweisen.

Als Polymerpolyole, einer speziellen Klasse der Polyetherpolyole, können allgemein aus der Polyurethanchemie bekannte Verbindungen eingesetzt werden, bevorzugt Styrol-Acrylnitril-Pfropfpolyole.

Gerade der Einsatz von Polymerpolyolen kann den Schrumpf des Polyisocyanat-Polyadditionsproduktes, beispielsweise des Polyurethans deutlich vermindern und somit zu einer verbesserten Haftung von (ii) an (i) und (iii) führen. Gegebenenfalls können als weiteren Maßnahmen, den Schrumpf zu verringern, bevorzugt Treibmittel (f) und/oder Gase (c) eingesetzt werden.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Die Polyesterpolyole besitzen vorzugsweise eine Funktionalität von 2 bis 4, insbesondere 2 bis 3, und ein Molekulargewicht von 480 bis 3000, vorzugsweise 600 bis 2000 und insbesondere 600 bis 1500.

Die erfindungsgemäßen Verbundelemente werden bevorzugt unter Verwendung von Polyetherpolyalkoholen als Komponente (b) zur Umsetzung mit den Isocyanaten hergestellt, zweckmäßigerweise solche mit einer mittleren Funktionalität gegenüber Isocyanaten von 1,5 bis 8, bevorzugt 2 bis 6, und einem Molekulargewicht von 400 bis 8000.

Die Verwendung von Polyetherpolyalkoholen bietet erhebliche Vorteile durch eine verbesserte Stabilität der Polyisocyanat-Polyadditionsprodukte gegen eine hydrolytische Spaltung und aufgrund der geringeren Viskosität, jeweils im Vergleich mit Polyesterpolyalkoholen. Die verbesserte Stabilität gegen Hydrolyse ist insbesondere bei einem Einsatz im Schiffbau vorteilhaft. Die geringere Viskosität der Polyetherpolyalkohole und der Reaktionsmischung zur Herstellung von (ii) enthaltend die Polyetherpolyalkohle ermöglicht eine schnellere und einfachere Befüllung des Raumes zwischen (i) und (iii) mit der Reaktionsmischung zur Herstellung der Verbundelemente. Aufgrund der erheblichen Abmessungen insbesondere von Konstruktionsteilen im Schiffbau sind niedrigviskose Flüssigkeiten von erheblichem Vorteil.

Als gegenüber Isocyanaten reaktive Verbindungen können des weiteren zusätzlich zu den genannten Verbindungen mit einem üblichen Molekulargewicht von 400 bis 8000 gegebenenfalls Diole und/oder Triole mit Molekulargewichten von 60 bis <400 als Kettenverlängerungs- und/oder Vernetzungsmittel bei dem erfindungsgemäßen Verfahren eingesetzt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Die Kettenverlängerungs- und/oder Vernetzungsmittel weisen vorzugsweise ein Molekulargewicht von 60 bis 300 auf. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan, niedermolekulare hydroxylgruppenhaltige Polyalkylenoxide auf Basis Ethylen- und/oder 1,2-Propylenoxid und den vorgenannten Diolen und/oder Triolen als Startermoleküle und/oder Diamine wie z.B. Diethyltoluendiamin und/oder 3,5-Dimethylthio-2,4-toluenediamin.

Sofern zur Herstellung der Polyisocyaynat-Polyadditionsprodukten Kettenverlängerungsmittel, Vernetzungsmittel oder Mischungen davon Anwendung finden, kommen diese zweckmäßigerweise in einer Menge von 0 bis 30 Gew.-%, vorzugsweise von 1 bis 30 Gew.-%, bezogen auf das Gewicht der insgesamt eingesetzten gegenüber Isocyanaten reaktiven Verbindungen (b), zum Einsatz.

Außerdem können als (b) aliphatische, araliphatische, cycloaliphatische und/oder aromatische Carbonsäuren zur Optimierung des Härtungsverlaufes bei der Herstellung von (ii) eingesetzt werden. Beispiele für solche Carbonsäuren sind Ameisensäure, Essigsäure, Bernsteinsäure, Oxalsäure, Malonsäure, Glutarsäure, Adipinsäure, Zitronensäure, Benzoesäure, Salicylsäure, Phenylessigsäure, Phthalsäure, Toluolsulfonsäure, Derivate der genannten Säuren, Isomere der genannten Säuren und beliebigen Mischungen der genannten Säuren. Der Gewichtsanteil dieser Säuren kann 0 bis 5 Gew.-%, bevorzugt 0,2 bis 2 Gew.-%, bezogen auf das Gesamtgewicht von (b), betragen.

Mit dem Einsatz von Amin-gestarteten Polyetherpolyalkoholen kann zudem das Durchhärteverhalten von der Reaktionsmischung zur Herstellung von (ii) verbessert werden. Bevorzugt werden die Verbindungen (b), wie auch die anderen Komponenten zur Herstellung von (ii), mit einem möglichst geringen Gehalt an Wasser eingesetzt, um die Bildung von Kohlendioxid durch Reaktion des Wassers mit Isocyanatgruppen zu vermeiden.

Als Komponente (c) zur Herstellung von (ii) können allgemein bekannte Verbindungen eingesetzt werden, die einen Siedepunkt bei einem Druck von 1 bar von kleiner (d.h. bei niedrigeren Temperaturen als) -50°C aufweisen, beispielsweise Luft, Kohlendioxid, Stickstoff, Helium und/oder Neon. Bevorzugt wird Luft eingesetzt. Die Komponente (c) ist bevorzugt gegenüber der Komponente (a), besonders bevorzugt gegenüber den Komponenten (a) und (b) inert, d.h. eine Reaktivität des Gases gegenüber (a) und (b) ist kaum, bevorzugt nicht nachzuweisen. Der Einsatz des Gases (c) unterscheidet sich grundlegend von dem Einsatz üblicher Treibmittel zur Herstellung von geschäumten Polyurethanen. Während übliche Treibmittel (f) flüssig eingesetzt werden (oder im Falle der gasförmigen physikalischen Treibmittel in der Polyol-Komponente bis zu einem geringen Prozentsatz löslich sind) und während der Umsetzung entweder aufgrund der Wärmeentwicklung verdampfen oder aber im Falle des Wassers aufgrund der Reaktion mit den Isocyanatgruppen gasförmiges Kohlendioxid entwickeln, wird in der vorliegenden Erfindung die Komponente (c) bevorzugt bereits gasförmig als Aerosol beispielsweise in der Polyolkomponente eingesetzt.

Als Katalysatoren (d) können allgemein bekannte Verbindungen eingesetzt werden, die die Reaktion von Isocyanaten mit den gegenüber Isocyanaten reaktiven Verbindungen stark beschleunigen, wobei vorzugsweise ein Gesamtkatalysatorgehalt von 0,001 bis 15 Gew.-%, insbesondere 0,05 bis 6 Gew.-%, bezogen auf das Gewicht der insgesamt eingesetzten gegenüber Isocyanaten reaktiven Verbindungen, verwendet wird. Beispielsweise können folgende Verbindungen verwendet werden: Triethylamin, Tributylamin, Dimethylbenzylamin, Dicyclohexylmethylamin, Dimethylcyclohexylamin, N,N,N',N'-Tetramethyl-diamino-diethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4-Diazabicyclo-(2,2,2)-octan (Dabco) und Alkanolaminverbindungen, wie Triethanolamin, Triisopropanolamin, N-Methyl- und N-Ethyl-diethanolamin, Dimethylaminoethanol, 2-(N,N-Dimethylaminoethoxy)ethanol, N,N',N"-Tris-(dialkylaminoalkyl)hexahydrotriazine, z.B. N,N',N"-Tris-(dimethylaminopropyl)-s-hexahydrotriazin, Eisen(II)-chlorid, Zinkchlorid, Bleioctoat und vorzugsweise Zinnsalze, wie Zinndioctoat, Zinndiethylhexoat, Dibutylzinndilaurat und/oder Dibutyldilaurylzinnmercaptid, 2,3-Dimethyl-3,4,5,6-tetrahydropyrimidin, Tetraalkylammoniumhydroxide, wie Tetramethylammoniumhydroxid, Alkalihydroxide, wie Natriumhydroxid, Alkalialkoholate, wie Natriummethylat und Kaliumisopropylat, und/oder Alkalisalze von langkettigen Fettsäuren mit 10 bis 20 C-Atomen und gegebenenfalls seitenständigen OH-Gruppen.

Es hat sich als sehr vorteilhaft erwiesen, die Herstellung von (ii) in Gegenwart von (d) durchzuführen, um die Reaktion zu beschleunigen.

Der Reaktionsmischung zur Herstellung der Polyisocyanat-Polyadidtionsprodukte (ii) können gegebenenfalls (e) Hilfsmittel einverleibt werden. Genannt seien beispielsweise Füllstoffe, oberflächenaktive Substanzen, Farbstoffe, Pigmente, Flammschutzmittel, Hydrolyseschutzmittel, fungistatische, bakteriostatisch wirkende Substanzen und Schaumstabilisatoren.

Als oberflächenaktive Substanzen kommen z.B. Verbindungen in Betracht, welche zur Unterstützung der Homogenisierung der Ausgangsstoffe dienen und gegebenenfalls auch geeignet sind, die Struktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure. Die oberflächenaktiven Substanzen werden üblicherweise in Mengen von 0,01 bis 5 Gew.-%, bezogen auf 100 Gew.-% der insgesamt eingesetzten gegenüber Isocyanaten reaktiven Verbindungen (b), angewandt.

Geeignete Flammschutzmittel sind beispielsweise Trikresylphosphat,Tris-(2-chlorethyl)phosphat, Tris-(2-chlorpropyl)phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-%, vorzugsweise 5 bis 25 Gew.-%, der genannten Flammschutzmittel, bezogen auf das Gewicht der insgesamt eingesetzten gegenüber Isocyanaten reaktiven Verbindungen, zu verwenden.

Als Füllstoffe, die gegebenenfalls zusätzlich zu den erfindungsgemäßen Hohlkörpern eingesetzt werden können, sind beispielsweise die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und Glasfasern geringer Länge. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern. Die anorganischen und organischen Füllstoffe können einzeln oder als Gemische verwendet werden.

Bevorzugt setzt man bei der Herstellung von (ii) 10 bis 70 Gew.-% Füllstoffe, bezogen auf das Gewicht von (ii), als (e) Hilfsmittel ein. Als Füllstoffe verwendet man bevorzugt Talkum, Kaolin, Calziumcarbonat, Schwerspat, Glasfasern und/oder Mikroglaskugeln. Die Größe der Partikel der Füllstoffe ist bevorzugt so zu wählen, dass das Eintragen der Komponenten zur Herstellung von (ii) in den Raum zwischen (i) und (iii) nicht behindert wird. Besonders bevorzugt weisen die Füllstoffe Partikelgrößen von < 0,5 mm auf.

Die Füllstoffe werden bevorzugt in Mischung mit der Polyolkomponente bei der Umsetzung zur Herstellung der Polyisocyanat-Polyadditionsprodukte eingesetzt.

Die Füllstoffe können dazu dienen, den im Vergleich beispielsweise zum Stahl größeren thermischen Ausdehnungskoeffizient der Polyisocyanat-Polyadditionsprodukte zu verringern und damit dem des Stahls anzupassen. Dies für einen nachhaltig festen Verbund zwischen den Schichten (i), (ii) und (iii) besonders vorteilhaft, da damit geringere Spannungen zwischen den Schichten bei thermischer Belastung auftreten.

Bevorzugt werden zur Herstellung von (ii) als (e) übliche Schaumstabilisatoren eingesetzt, die kommerziell erhältlich und dem Fachmann allgemein bekannt sind, beispielsweise allgemein bekannte Polysiloxan-Polyoxyalkylen-Blockcopolymere, z.B. Tegostab 2219 der Firma Goldschmidt. Der Anteil an diesen Schaumstabilisatoren bei der Herstellung von (ii) beträgt bevorzugt 0,001 bis 10 Gew.-%, besonders bevorzugt 0,01 bis 10 Gew.-%, insbesondere 0,01 bis 2 Gew.-%, bezogen auf das Gewicht der zur Herstellung von (ii) eingesetzten Komponenten (b), (e) und gegebenenfalls (d). Der Einsatz dieser Schaumstabilisatoren bewirkt, dass die Komponente (c) in der Reaktionmischung zur Herstellung von (ii) stabilisiert wird.

Als Treibmittel (f) können aus der Polyurethanchemie allgemein bekannte Treibmittel eingesetzt werden, beispielsweise physikalische und/oder chemische Treibmittel. Derartige physikalische Treibmittel weisen im allgemeinen einen Siedepunkt bei einem Druck von 1 bar von größer (d.h. bei höheren Temperaturen als) -50°C auf. Beispiele für physikalische Treibmittel sind z.B. FCKW, HFCKW, HFKW, aliphatische Kohlenwasserstoffe, cycloaliphatische Kohlenwasserstoffe, jeweils beispielsweise mit 4 bis 6 Kohlenstoffatomen oder Gemische dieser Stoffe, beispielsweise Trichlorfluormethan (Siedepunkt 24_C), Chlordifluormethan (Siedepunkt -40.8_C), Dichlorfluorethan (Siedepunkt 32_C), Chlordifluorethan (Siedepunkt -9.2_C), Dichlortrifluorethan (Siedepunkt 27.1_C), Terafluorethan (Siedepunkt -26.5_C), Hexafluorbutan (Siedepunkt 24.6_C), iso-Pentan (Siedepunkt 28_C), n-Pentan (Siedepunkt 36_C), Cyclopentan (Siedepunkt 49_C).

Als chemische Treibmittel, d.h. Treibmittel die aufgrund einer Reaktion, beispielsweise mit Isocyanatgruppen, gasförmige Produkte bilden, kommen beispielsweise Wasser, Hydratwasser haltige Verbindungen, Carbonsäuren, tert.-Alkohole, z.B. t-Butanol, Carbamate, beispielsweise die in der Schrift EP-A 1000955, insbesondere auf Seite 2, Zeilen 5 bis 31 sowie Seite 3, Zeilen 21 bis 42 beschrieben Carbamate, Carbonate, z.B. Ammoniumcarbonat und/oder Ammoniumhydrogencarbonat und/oder Guanidincarbamat in Betracht.

Bevorzugt werden als Treibmittel (f) Wasser und/oder Carbamate eingesetzt.

Bevorzugt werden die Treibmittel (f) in einer Menge eingesetzt, die ausreicht, um die bevorzugte Dichte von (ii) von 350 bis 1200 kg/m³ zu erhalten. Dies kann mit einfachen Routineexperimenten, die dem Fachmann allgemein geläufig sind, ermittelt werden. Besonders bevorzugt werden die Treibmittel (f) in einer Menge von 0,05 bis 10 Gew.-%, insbesondere von 0,1 bis 5 Gew.-%, jeweils bezogen auf das Gesamtgewicht der Polyisocyanat-Polyadditionsprodukte, eingesetzt.

Das Gewicht von (ii) entspricht per Definition dem Gewicht der zur Herstellung von (ii) eingesetzten Komponenten (a), (b) und gegebenenfalls (c), (d), (e) und/oder (f).

Zur Herstellung der erfindungsgemäßen Polyisocyanat-Polyadditionsprodukte werden die Isocyanate und die gegenüber Isocyanaten reaktiven Verbindungen in solchen Mengen zur Umsetzung gebracht, daß das Äquivalenzverhältnis von NCO-Gruppen der Isocyanate (a) zur Summe der reaktiven Wasserstoffatome der gegenüber Isocyanaten reaktiven Verbindungen (b) und gegebenenfalls (f) 0,85 bis 1,25 : 1, vorzugsweise 0,95 bis 1,15 : 1 und insbesondere 1 bis 1,05 : 1, beträgt. Falls (ii) zumindest teilweise Isocyanuratgruppen gebunden enthalten, wird üblicherweise ein Verhältnis von NCO-Gruppen zur Summe der reaktiven Wasserstoffatome von 1,5 bis 60 : 1, vorzugsweise 1,5 bis 8 : 1, angewandt.

Die Polyisocyanat-Polyadditionsprodukte werden üblicherweise nach dem one shot-Verfahren oder nach dem Prepolymerverfahren, beispielsweise mit Hilfe der Hochdruck- oder Niederdruck-Technik hergestellt.

Als besonders vorteilhaft hat es sich erwiesen, nach dem Zweikomponentenverfahren zu arbeiten und die gegenüber Isocyanaten reaktiven Verbindungen (b), gegebenenfalls die Treibmittel (f) und gegebenenfalls die Katalysatoren (d) und/oder Hilfsmittel (e) in der Komponente (A) (Polyolkomponente) zu vereinigen und bevorzugt innig miteinander zu vermischen und als Komponente (B) die Isocyanate (a) zu verwenden.

Die Komponente (c) kann der Reaktionsmischung enthaltend (a), (b) und gegebenenfalls (f), (d) und/oder (e) zugeführt werden, und/oder den einzelnen, bereits beschriebenen Komponenten (a), (b), (A) und/oder (B). Die Komponente, die mit (c) gemischt wird, liegt üblicherweise flüssig vor. Bevorzugt werden die Komponenten in die Komponente (b) gemischt.

Das Mischen der entsprechenden Komponente mit (c) kann nach allgemein bekannten Verfahren erfolgen. Beispielsweise kann (c) durch allgemein bekannte Beladungseinrichtungen, beispielsweise Luftbetadungseinrichtungen, bevorzugt unter Druck, beispielsweise aus einem Druckbehälter oder durch einen Kompressor komprimiert, z.B. durch eine Düse der entsprechenden Komponente zugeführt werden. Bevorzugt erfolgt eine weitgehende Durchmischung der entsprechende Komponenten mit (c), so daß Gasblasen von (c) in der üblicherweise flüssigen Komponente bevorzugt eine Größe von 0,0001 bis 10, besonders bevorzugt 0,0001 bis 1 mm aufweisen.

Der Gehalt an (c) in der Reaktionsmischung zur Herstellung von (ii) kann in der Rücklaufleitung der Hochdruckmaschine mit allgemein bekannten Messgeräten über die Dichte der Reaktionsmischung bestimmt werden. Die Gehalt an (c) in der Reaktionsmischung kann über eine Kontrolleinheit bevorzugt automatisch auf der Grundlage dieser Dichte reguliert werden. Die Komponentendichte kann während der üblichen Zirkulation des Materials in der Maschine auch bei sehr niedriger Zirkulationsgeschwindigkeit online bestimmt und reguliert werden.

Die erfindungsgemäß erhältlichen Verbundelemente finden Verwendung vor allem in Bereichen, in denen Konstruktionselemente benötigt werden, die großen Kräften standhalten, beispielsweise als Konstruktionsteile im Schiffsbau, z.B. in Schiffsrümpfen, beispielsweise Schiffsdoppelrümpfe mit einer äußeren und einer inneren Wand, und Laderaumabdeckungen, Laderaumtrennwänden, Ladeklappen oder in Bauwerken, beispielsweise Brücken oder als Konstruktionselemente im Hausbau, insbesondere in Hochhäusern.

Die erfindungsgemäßen Verbundelemente sind nicht mit klassischen Sandwichelementen zu verwechseln, die als Kern einen Polyurethan- und/oder Polyisocyanurathartschaumstoff enthalten und üblicherweise zur thermischen Isolierung eingesetzt werden. Derartige bekannte Sandwichelemente wären aufgrund ihrer vergleichsweise geringeren mechanischen Belastbarkeit nicht für die genannten Anwendungsbereiche geeignet.

Die erfindungsgemäßen Verbundelemente weisen bevorzugt eine Breite von 0,2 m bis 5 m, bevorzugt 0,5 bis 3 m, und eine Länge von 0,5 m bis 10 m, bevorzugt 1 m bis 5 m, auf.

## Patentansprüche

1. Verfahren zur Herstellung von Verbundelementen, die folgende Schichtstruktur aufweisen:
(i) 2 bis 20 mm Metall, Kunststoff oder Holz
(ii) 10 bis 300 mm Kunststoff,
(iii) 2 bis 20 mm Metall, Kunststoff oder Holz
wobei in der Schicht (ii) Hohlkörper mit einem äußeren Durchmesser kleiner 5 mm vorliegen, **dadurch gekennzeichnet, dass** man zur Herstellung von (ii) (a) Isocyanate und (b) gegenüber Isocyanaten reaktive Verbindungen in Gegenart von Hohlkörpern umsetzt und man die Hohlkörper der Komponente (b) und/oder der Komponente (a) und/oder flüssigen Umsetzungsprodukten von (a) und (b) zugibt.

2. Verfahren gemäß Anspruch 1, **dadurch gekennzeichnet, dass** die Hohlkörper eine Dichte von kleiner 1 g/cm³ aufweisen.

3. Verfahren gemäß Anspruch 1, **dadurch gekennzeichnet, dass** die Hohlkörper eine durchschnittliche Wandstärke von 5 bis 20 % des Hohlkörperdurchmessers besitzen.

4. Verfahren gemäß Anspruch 1, **dadurch gekennzeichnet, dass** die Hohlkörper auf Glas, Aluminiumsilikat oder Keramik basieren.

5. Verfahren gemäß Anspruch 1, **dadurch gekennzeichnet, dass** die Hohlkörper 1 bis 60 % des Gesamtvolumens der Schicht (ii) einnehmen.

## Claims

1. A process for the production of a composite element which has the following layer structure:
(i) from 2 to 20 mm of metal, plastic or wood,
(ii) from 10 to 300 mm of plastic and
(iii) from 2 to 20 mm of metal, plastic or wood,
wherein hollow bodies having an external diameter of less than 5 mm are present in the layer (ii), wherein, for the production of (ii), (a) isocyanates and (b) compounds reactive toward isocyanates are reacted in the presence of hollow bodies and the hollow bodies are added to component (b) and/or component (a) and/or liquid reaction products of (a) and (b).

2. The process according to claim 1, wherein the hollow bodies have a density of less than 1 g/cm³.

3. The process according to claim 1, wherein the hollow bodies have an average wall thickness of from 5 to 20% of the diameter of the hollow body.

4. The process according to claim 1, wherein the hollow bodies are based on glass, aluminum silicate or ceramic.

5. The process according to claim 1, wherein the hollow bodies occupy from 1 to 60% of the total volume of the layer (ii).

## Revendications

1. Procédé de fabrication d'éléments composites présentant la structure en couches suivante :
(i) 2 à 20 mm de métal, de matière synthétique ou de bois,
(ii) 10 à 300 mm de matière synthétique,
(iii) 2 à 20 mm de métal, de matière synthétique ou de bois,
des corps creux étant présents dans la couche (ii), qui présentent un diamètre extérieur inférieur à 5 mm, **caractérisé en ce que**, pour la fabrication de (ii), on fait réagir (a) des isocyanates et (b) des composés réactifs par rapport aux isocyanates en présence de corps creux et on ajoute les corps creux au composant (b) et/ou au composant (a) et/ou aux produits liquides de la réaction de (a) et (b).

2. Procédé selon la revendication 1, **caractérisé en ce que** les corps creux présentent une densité inférieure à 1 g/cm³.

3. Procédé selon la revendication 1, **caractérisé en ce que** les corps creux possèdent une épaisseur de paroi moyenne de 5 à 20 % du diamètre des corps creux.

4. Procédé selon la revendication 1, **caractérisé en ce que** les corps creux sont à base de verre, de silicate d'aluminium ou de céramique.

5. Procédé selon la revendication 1, **caractérisé en ce que** les corps creux prennent de 1 à 60 % du volume total de la couche (ii).
